# NEUE EUROPÄISCHE PATENTSCHRIFT

(11) **EP 2 465 119 B2**
(45) Veröffentlichungstag und Bekanntmachung des Hinweises auf die Entscheidung über den Einspruch: **24.07.2019**
(45) Hinweis auf die Patenterteilung: 27.01.2016
(21) Anmeldenummer: 10737904.2
(22) Anmeldetag: 29.07.2010
(51) Int. Cl.: H01F 1/01

(54) **WÄRMETAUSCHERBETT AUS EINER KASKADE MAGNETOKALORISCHER MATERIALIEN**
HEAT-EXCHANGE BED BASED ON A MAGNETOCALORIC MATERIALS CASCADE
LIT ÉCHANGEUR DE CHALEUR FORMÉ D'UNE CASCADE DE MATÉRIAUX MAGNÉTOCALORIQUES

(30) Priorität: 10.08.2009 EP 09167550
(43) Veröffentlichungstag der Anmeldung: 20.06.2012
(73) Patentinhaber: BASF SE, 67056 Ludwigshafen am Rhein (DE)
(72) Erfinder: CARROLL, Colman-Patrick, 68159 Mannheim (DE); ROGGE, Olaf, 67273 Dackenheim (DE); REESINK, Bennie, NL-7107 AD Winterswijk-Kotten (NL)
(74) Vertreter: BASF IP Association
(86) Internationale Anmeldenummer: PCT/EP2010/061025
(87) Internationale Veröffentlichungsnummer: WO 2011/018347

(56) Entgegenhaltungen:
- WO-A1-2008/099234
- US-A- 4 332 135
- US-A- 5 124 215
- US-A1- 2004 093 877
- US-A1- 2008 314 048
- US-B1- 6 589 366

## Beschreibung

Die Erfindung betrifft ein Wärmetauscherbett aus einer Kaskade magnetokalorischer Materialien, Verfahren zu seiner Herstellung und seine Verwendung in Kühlschränken, Klimaanlagen, Wärmepumpen oder in der Stromerzeugung durch direkte Umwandlung von Wärme.

Derartige Materialien sind prinzipiell bekannt und beispielsweise in WO 2004/068512 beschrieben. Die magnetischen Kühlungstechniken basieren auf dem magnetokalorischen Effekt (MCE) und können eine Alternative zu den bekannten Dampf-Kreislauf-Kühlverfahren darstellen. In einem Material, das einen magnetokalorischen Effekt zeigt, führt die Ausrichtung von zufällig orientierten magnetischen Momenten durch ein externes Magnetfeld zu einem Erwärmen des Materials. Diese Wärme kann vom MCE-Material in die Umgebungsatmosphäre durch einen Wärmetransfer abgeführt werden. Wenn das Magnetfeld daraufhin abgestellt wird oder entfernt wird, gehen die magnetischen Momente wieder in eine Zufallsanordnung über, was zu einem Abkühlen des Materials unter Umgebungstemperatur führt. Dieser Effekt kann zu Kühlzwecken ausgenutzt werden, siehe auch Nature, Vol. 415, 10. Januar 2002, Seiten 150 bis 152. Typischerweise wird ein Wärmetransfermedium wie Wasser zur Wärmeabfuhr aus dem magnetokalorischen Material eingesetzt.

Die in thermomagnetischen Generatoren eingesetzten Materialien basieren ebenfalls auf dem magnetokalorischen Effekt. In einem Material, das einen magnetokalorischen Effekt zeigt, führt die Ausrichtung von zufällig orientierten magnetischen Momenten durch ein externes Magnetfeld zu einem Erwärmen des Materials. Diese Wärme kann vom MCE-Material in die Umgebungsatmosphäre durch einen Wärmetransfer abgeführt werden. Wenn das Magnetfeld daraufhin abgestellt oder entfernt wird, gehen die magnetischen Momente wieder in eine Zufallsanordnung über, was zu einem Abkühlen des Materials unter Umgebungstemperatur führt. Dieser Effekt kann einerseits zu Kühlzwecken ausgenutzt werden, andererseits, um Wärme in elektrische Energie umzuwandeln.

Die magnetokalorische Erzeugung von elektrischer Energie ist verbunden mit der magnetischen Heizung und Kühlung. In den Zeiten der ersten Konzipierung wurde das Verfahren zur Energieerzeugung als pyromagnetische Energieerzeugung beschrieben. Verglichen mit Vorrichtungen der Peltier- oder Seebeck-Typs können diese magnetokalorischen Vorrichtungen eine wesentlich höhere Energieeffizienz aufweisen.

Die Forschung zu diesem physikalischen Phänomen begann im späten 19. Jahrhundert, als zwei Wissenschaftler, Tesla und Edison, pyromagnetische Generatoren zum Patent anmeldeten.

Für die thermomagnetischen oder magnetokalorischen Anwendungen sollte das Material einen effizienten Wärmeaustausch zulassen, um hohe Wirkungsgrade erreichen zu können. Sowohl bei der Kühlung als auch bei der Stromerzeugung wird das thermomagnetische Material in einem Wärmetauscher eingesetzt.

Die Verwendung mehrerer unterschiedlicher magnetokalorischer Materialien in einer Wärmepumpeneinheit ist an sich bekannt. Die EP-A-1 736 717 beschreibt einen kontinuierlich rotierenden magnetischen Kühlschrank und eine Wärmepumpe. Dabei können vier rotierende magnetische Kühler oder Wärmepumpen mit zylindrischen Strukturen in einer Reihe kombiniert werden. Die Warmseite des ersten Kühlers ist mit der Kaltseite des zweiten Kühlers verbunden usw. Jede Stufe des Kaskadensystems kann unterschiedliche magnetokalorische Materialien aufweisen. Eine entsprechende Konfiguration ist in Figur 7A angegeben.

Die US 2009/0217675 betrifft eine magnetische Kühlvorrichtung. Dabei wird das magnetokalorische Material in ein helixförmiges Rohr eingebracht. Es können mehrere helikale Bereiche in Serie geschaltet sein, indem die Enden miteinander verbunden werden. Die helikalen Anteile können mit unterschiedlichen magnetokalorischen Materialien gefüllt werden, um einen weiten Temperaturbereich abzudecken.

Die prioritätsältere, nicht vorveröffentlichte europäische Patentanmeldung mit dem Aktenzeichen EP 09 167 550.4, angemeldet am 10. August 2009, betrifft Wärmetauscherbetten aus thermomagnetischem Material. Es ist beschrieben, dass es in gepackten Wärmetauscherbetten möglich ist, eine Serie von unterschiedlichen magnetokalorischen Materialien mit unterschiedlichen Curie-Temperaturen zu kombinieren. Dies soll es erlauben, eine insgesamt große Temperaturänderung in einem einzigen Wärmetauscherbett zu erreichen. Bevorzugt sollen thermomagnetische Materialien kombiniert werden, deren Maximalunterschied in der Curie-Temperatur 1 bis 10 °C, besonders bevorzugt 2 bis 6 °C beträgt.

Aufgabe der vorliegenden Erfindung ist die Bereitstellung von Wärmetauscherbetten aus einer Kaskade von mindestens drei unterschiedlichen magnetokalorischen Materialien mit unterschiedlichen Curie-Temperaturen, die eine besonders gute Wirksamkeit der Materialkaskade zeigen.

Die Aufgabe wird erfindungsgemäß gelöst durch ein Wärmetauscherbett aus einer Kaskade von mindestens drei unterschiedlichen magnetokalorischen Materialien mit unterschiedlichen Curie-Temperaturen, die gemäß aufsteigender oder absteigender Curie-Temperatur aneinandergereiht und vorzugsweise jeweils durch dazwischenliegende thermische und/oder elektrische Isolatoren voneinander isoliert sind, wobei die Differenz der Curie-Temperaturen benachbarter magnetokalorischer Materialien 0,5 bis 2,5 °C beträgt, das Wärmetauscherbett ein gepacktes Bett aus Teilchen der magnetokalorischen Materialien ist und sich im gepackten Bett eine Porosität vom 40 bis 45 % ergibt.

Die Aufgabe wird ferner gelöst durch ein Verfahren zur Herstellung derartiger Wärmetauscherbetten, bei dem man ein Pulver des jeweiligen thermomagnetischen Materials einer Formgebung zur Ausbildung der thermomagnetischen Materialien unterzieht und nachfolgend die Materialien zur Ausbildung des Wärmetauscherbettes, vorzugsweise mit thermischen und/oder elektrischen Isolatoren alternierend, packt oder sie in eine thermische und/oder elektrische Isolatormatrix einbettet.

Es wurde erfindungsgemäß gefunden, dass die Kaskade der unterschiedlichen magnetokalorischen Materialien besonders vorteilhaft betrieben werden kann, wenn die Differenz der Curie-Temperaturen benachbarter magnetokalorischer Materialien 0,5 bis 2,5 °C, bevorzugt 1,5 bis 2,5 °C, insbesondere 1,8 bis 2,2 °C, speziell etwa 2,0 °C beträgt.

Dabei können im Wärmetauscherbett mindestens drei unterschiedliche magnetokalorische Materialien, vorzugsweise 5 bis 50 unterschiedliche magnetokalorische Materialien, insbesondere 10 bis 30 unterschiedliche magnetokalorische Materialien vorliegen.

Die Anzahl der magnetokalorischen Materialien kann sich nach den praktischen Erfordernissen und apparativen Gegebenheiten richten. Durch eine größere Anzahl unterschiedlicher magnetokalorischer Materialien kann ein größerer Temperaturbereich ausgenutzt werden.

Die magnetokalorischen Materialien sind erfindungsgemäß aneinandergereiht und vorzugsweise jeweils durch dazwischenliegende thermische und/oder elektrische Isolatoren voneinander isoliert. Vorzugsweise handelt es sich dabei um thermische Isolatoren, insbesondere um gleichzeitig thermische und elektrische Isolatoren.

Abgesehen von den vorzugsweise mitverwendeten thermischen und/oder elektrischen Isolatoren liegen die unterschiedlichen magnetokalorischen Materialien in direktem räumlichen Kontakt miteinander vor, so dass keine durch Leitungen miteinander verbundene unterschiedliche Apparate vorliegen, wie beispielsweise gemäß Figur 7A der EP-A-1 736 717.

Die Materialien liegen zudem vorzugsweise nicht in helikaler Form vor, wie gemäß US 2009/0217675.

Die dreidimensionale Form der einzelnen unterschiedlichen magnetokalorischen Materialien kann beliebig gewählt werden. Es handelt sich um gepackte Betten aus Teilchen der magnetokalorischen Materialien.

Die Betten der einzelnen Materialien werden zur erfindungsgemäßen Kaskade kombiniert, indem sie entweder direkt miteinander verbunden sind oder aufeinandergestapelt werden oder durch dazwischenliegende thermische und/oder elektrische Isolatoren voneinandergetrennt sind.

Die thermischen und/oder elektrischen Isolatoren können aus beliebigen geeigneten Materialien ausgewählt werden. Geeignete Materialien vereinen eine niedrige thermische Leitfähigkeit mit einer niedrigen elektrischen Leitfähigkeit und vermindern das Auftreten von Eddie-Strömen, die Kreuzkontamination der unterschiedlichen magnetokalorischen Materialien durch Bestandteile der benachbarten magnetokalorischen Materialien und Wärmeverluste aufgrund der Wärmeleitung von der Heißseite zur Kaltseite. Vorzugsweise verbinden die Isolatoren eine hohe mechanische Festigkeit mit guter elektrischer und thermischer Isolierwirkung. Beispiele geeigneter Materialien sind technische Kunststoffe (Engineering Plastics) wie PEEK, PSU, PES, flüssigkristalline Polymere und Mehrschicht-Verbundmaterialien, Kohlenstofffasern und -netze, Keramiken, anorganische Oxide, Gläser, Halbleiter sowie Kombinationen daraus.

Besonders bevorzugt werden die Isolatoren aus Kohlenstofffasern aufgebaut.

Vorteilhafterweise weisen die thermischen und/oder elektrischen Isolatoren eine hohe mechanische Festigkeit auf, wie beispielsweise bei technischen Kunststoffen (Engineering Plastics), Mehrschicht-Verbundmaterialien, Kohlenstofffasern und Kohlenstofffasernetzen. Hierdurch werden die mechanischen Belastungen im Bett vermindert oder aufgefangen, die durch den Zyklus des Hinein- und Herausbringens aus dem magnetischen Feld resultieren. Beim Hineinbringen in das Magnetfeld und Herausbringen aus dem Magnetfeld können die auf das magnetokalorische Material einwirkenden Kräfte aufgrund der starken Magneten beträchtlich sein.

Benachbarte magnetokalorische Materialien weisen vorzugsweise einen Abstand von 0,05 bis 3 mm, besonders bevorzugt 0,1 bis 0,5 mm auf. Dabei wird der Zwischenraum zwischen den magnetokalorischen Materialien vorzugsweise durch die thermischen und/oder elektrischen Isolatoren zu mindestens 90 %, vorzugsweise vollständig ausgefüllt.

Gemäß einer Ausführungsform der Erfindung bilden die thermischen und/oder elektrischen Isolatoren eine Matrix, in die die magnetokalorischen Materialien eingebettet sind. Dies bedeutet, dass jedes der magnetokalorischen Materialien und auch die Kaskade der magnetokalorischen Materialien insgesamt vollständig vom Isolatormaterial umgeben sind. Die Dicke des die Kaskade umgebenden Isolatormaterials (Schichtdicke) beträgt dabei vorzugsweise 0,5 bis 10 mm, besonders bevorzugt 1 bis 5 mm.

Das Wärmetauscherbett kann dabei in ansonsten beliebiger geeigneter Weise aus den magnetokalorischen Materialien aufgebaut sein. Es ist ein gepacktes Wärmetauscherbett aus einzelnen thermomagnetischen Materialteilchen.

Stapel von Wärmetauscherbetten können vorzugsweise durch entsprechende Zwischenlagen gegeneinander thermisch isoliert werden, z. B. durch Kohlenstoffsiebe. Hierdurch werden Wärmeverluste durch Wärmeleitung im Material verhindert. Durch entsprechende Auslegung können die Zwischenlagen auch zur gleichmäßigen Verteilung des Wärmetauschermediums dienen.

Das gepackte Wärmetauscherbett ist vorzugsweise aus thermomagnetischen Materialteilchen, die einen mittleren Durchmesser im Bereich von 50 µm bis 1 mm aufweisen und im gepackten Bett eine Porosität im Bereich von 40 bis 45 % ergeben, aufgebaut.

Die Porosität ist definiert als der Volumenanteil an leerem Raum (Zwischenräume) im Wärmetauscherbett.

Das Wärmetauscherbett kann dabei durch ein Verfahren hergestellt werden, bei dem man ein Pulver des thermomagnetischen Materials einer Formgebung zur Ausbildung der thermomagnetischen Materialteilchen unterzieht und nachfolgend die Materialteilchen zur Ausbildung des Wärmeaustauscherbettes packt.

Die Aufgabe wird zudem gelöst durch die Verwendung eines Wärmetauscherbetts, wie es vorstehend definiert ist, in Kühlschränken, Klimaanlagen, Wärmepumpen oder in der Stromerzeugung durch direkte Umwandlung von Wärme.

Ein gepacktes Wärmetauscherbett aus thermomagnetischen Materialteilchen ist eine hocheffiziente Materialgeometrie, die einen optimalen Betrieb des Wärmetauscherbetts erlaubt, wenn die thermomagnetischen Materialteilchen einen mittleren Durchmesser im Bereich von 50 µm bis 1 mm aufweisen und im gepackten Bett eine Porosität im Bereich von 40 bis 45 % gegeben ist. Die einzelnen Materialteilchen können dabei eine beliebige geeignete Form aufweisen. Bevorzugt haben die Materialteilchen Kugelform, Granulatform, Plattenform oder Zylinderform. Besonders bevorzugt haben die Materialteilchen Kugelform. Der Durchmesser der Materialteilchen, insbesondere der Kugeln, beträgt 50 µm bis 1 mm, besonders bevorzugt 200 bis 400 µm. Die Materialteilchen, insbesondere Kugeln, können dabei eine Größenverteilung aufweisen. Bevorzugt ist die Größenverteilung eng, so dass ganz überwiegend Kugeln einer Größe vorliegen. Bevorzugt weicht der Durchmesser um nicht mehr als 20 %, besonders bevorzugt um nicht mehr als 10 %, insbesondere um nicht mehr als 5 % vom mittleren Durchmesser ab.

Im gepackten Bett ergibt sich eine Porosität im Bereich von 40 bis 45 %.

Materialteilchen, insbesondere Kugeln mit den vorstehenden Dimensionen geben als gepacktes Wärmetauscherbett hohe Wärmetransferkoeffizienten zwischen Feststoff und Fluid (Wärmetauscherfluid), wobei ein geringer bis niedriger Druckabfall herrscht. Dies erlaubt einen verbesserten Leistungskoeffizienten (Coefficient of Performance; COP) des Wärmetauscherbettes. Der große Wärmetransferkoeffizient erlaubt es, die gepackten Betten bei höheren Frequenzen als üblich zu betreiben und erlaubt damit eine größere Energieextraktion.

Für die jeweiligen Betriebsbedingungen kann die Leistung des gepackten Wärmetauscherbetts durch Verwendung von Materialteilchen, insbesondere Kugeln, unterschiedlicher Durchmesser optimiert werden. Ein geringerer Durchmesser, insbesondere Kugeldurchmesser, führt zu einem höheren Wärmetransferkoeffizienten und erlaubt damit einen besseren Wärmeaustausch. Dies ist jedoch mit einem höheren Druckverlust durch das Wärmetauscherbett verbunden. Umgekehrt führt die Verwendung größerer Materialteilchen, insbesondere Kugeln, zu einem langsameren Wärmetransfer, aber auch zu niedrigeren Druckverlusten.

Die Herstellung des gepackten Wärmetauscherbettes aus den thermomagnetischen Materialteilchen kann auf beliebige geeignete Weise erfolgen. Dabei werden zunächst die thermomagnetischen Materialteilchen hergestellt, beispielsweise durch Formgebung eines Pulvers des thermoelektrischen Materials zur Ausbildung der thermomagnetischen Materialteilchen. Nachfolgend werden die Materialteilchen zur Ausbildung des Wärmetauscherbettes gepackt. Dies kann durch Schütten der Materialteilchen in ein geeignetes Behältnis erfolgen, wobei das Setzen des Bettes durch Rütteln verbessert werden kann. Auch ein Aufschwemmen in einem Fluid mit nachfolgendem Absetzen der Materialteilchen ist möglich. Ferner ist es möglich, die einzelnen Materialteilchen gezielt zur Ausbildung einer gleichmäßigen Struktur zu setzen. Hierbei kann beispielsweise eine kubisch dichte Packung von Kugeln erreicht werden.

Die Bewegungsfestigkeit des gepackten Wärmetauscherbettes kann durch beliebige geeignete Maßnahmen erreicht werden. Beispielsweise kann das Behältnis, in dem das gepackte Wärmetauscherbett vorliegt, allseits geschlossen sein. Es kann sich beispielsweise um einen Gitterkäfig handeln. Darüber hinaus ist es möglich, die einzelnen Materialteilchen miteinander zu verbinden, beispielsweise durch oberflächliches Anschmelzen der Materialteilchen im gepackten Bett oder durch Aneinandersintern der Materialteilchen im gepackten Bett. Das oberflächliche Anschmelzen oder Zusammensintern sollte so erfolgen, dass die Zwischenräume zwischen den Materialteilchen weitestmöglich erhalten bleiben.

Die Ausbildung des gepackten Wärmetauscherbettes durch thermomagnetische Materialteilchen in Platten-, Zylinder-, Granulat- oder Kugelform oder ähnlicher Form ist vorteilhaft, da mit ihr ein großes Verhältnis von Oberfläche zur Masse erreicht wird. Hierdurch wird eine verbesserte Wärmetransferrate bei niedrigerem Druckverlust erreicht.

Das thermomagnetische Material an sich kann dabei aus beliebigen geeigneten thermomagnetischen Materialien ausgewählt werden. Geeignete Materialien sind in einer Vielzahl von Schriften beschrieben, beispielsweise in WO 2004/068512.

Bevorzugte thermomagnetische Materialien sind ausgewählt aus
(1) Verbindungen der allgemeinen Formel (I)

   (A_{y}B_{1-y})_{2+δ}C_{w}DₓE_{z} (I)

   mit der Bedeutung
   - A: Mn oder Co,
   - B: Fe, Cr oder Ni,
   - C, D, E: mindestens zwei von C, D, E sind voneinander verschieden, haben eine nicht-verschwindende Konzentration und sind ausgewählt aus P, B, Se, Ge, Ga, Si, Sn, N, As und Sb, wobei mindestens eines von C, D und E Ge oder Si ist,
   - δ: Zahl im Bereich von - 0,1 bis 0,1
   - w, x, y, z: Zahlen im Bereich von 0 bis 1, wobei w + x + z = 1 ist;
(2) auf La und Fe basierenden Verbindungen der allgemeinen Formeln (II) und/oder (III) und/oder (IV)

   La(FeₓAl₁₋ₓ)₁₃H_{y} oder La(FeₓSi₁₋ₓ)₁₃H_{y} (II)

   mit
   - x: Zahl von 0,7 bis 0,95
   - y: Zahl von 0 bis 3, vorzugsweise 0 bis 2;

   La(FeₓAl_{y}Co_{z})₁₃ oder Lₐ(FeₓSi_{y}Co_{z})₁₃ (III)
   mit
   - x: Zahl von 0,7 bis 0,95
   - y: Zahl von 0,05 bis 1 - x
   - z: Zahl von 0,005 bis 0,5;

   LaMnₓFe₂₋ₓGe (IV)

   mit
   - x: Zahl von 1,7 bis 1,95 und
(3) Heusler-Legierungen des Typs MnTP mit T Übergangsmetall und P einem p-dotierenden Metall mit einem elextron count pro Atom e/a im Bereich von 7 bis 8,5,
(4) auf Gd und Si basierenden Verbindungen der allgemeinen Formel (V)

   Gd₅(SiₓGe₁₋ₓ)₄ (V)

   mit x Zahl von 0,2 bis 1,
(5) Fe₂P-basierten Verbindungen,
(6) Manganiten des Perovskit-Typs,
(7) Seltenerden-Elemente enthaltenden Verbindungen der allgemeinen Formeln (VI) und (VII)

   Tb₅(Si₄₋ₓGeₓ) (VI)

   mit x = 0, 1, 2, 3, 4

   XTiGe (VII)

   mit X = Dy, Ho, Tm,
(8) auf Mn und Sb oder As basierenden Verbindungen der allgemeinen Formeln (VIII) und (IX)

   Mn₂₋ₓZₓSb (VIII)

   Mn₂ZₓSb₁₋ₓ (IX)

   mit
   - Z: Cr, Cu, Zn, Co, V, As, Ge,
   - x: 0,01 bis 0,5,
   wobei Sb durch As ersetzt sein kann, sofern Z nicht As ist.

Es wurde erfindungsgemäß gefunden, dass die vorstehenden thermomagnetischen Materialien vorteilhaft in Wärmetauschern, der magnetischen Kühlung, Wärmepumpen oder thermomagnetischen Generatoren oder Regeneratoren eingesetzt werden können, wenn sie eine erfindungsgemäße Struktur aufweisen.

Besonders bevorzugt sind erfindungsgemäß die metallbasierten Materialien ausgewählt aus den Verbindungen (1), (2) und (3) sowie (5).

Erfindungsgemäß besonders geeignete Materialien sind beispielsweise in WO 2004/068512, Rare Metals, Vol. 25, 2006, Seiten 544 bis 549, J. Appl. Phys. 99,08Q107 (2006), Nature, Vol. 415, 10. Januar 2002, Seiten 150 bis 152 und Physica B 327 (2003), Seiten 431 bis 437 beschrieben.

In den vorstehend genannten Verbindungen der allgemeinen Formel (I) sind bevorzugt C, D und E identisch oder unterschiedlich und ausgewählt aus mindestens einem von P, Ge, Si, Sn und Ga.

Das thermomagnetische Material der allgemeinen Formel (I) ist vorzugsweise ausgewählt aus mindestens quarternären Verbindungen, die neben Mn, Fe, P und gegebenenfalls Sb zudem Ge oder Si oder As oder Ge und Si, Ge und As oder Si und As oder Ge, Si und As enthalten.

Bevorzugt sind mindestens 90 Gew.-%, besonders bevorzugt mindestens 95 Gew.-% der Komponente A Mn. Besonders bevorzugt sind mindestens 90 Gew.-%, besonders bevorzugt mindestens 95 Gew.-% von B Fe. Bevorzugt sind mindestens 90 Gew.-%, besonders bevorzugt mindestens 95 Gew.-% von C P. Bevorzugt sind mindestens 90 Gew.-%, besonders bevorzugt mindestens 95 Gew.-% von D Ge. Bevorzugt sind mindestens 90 Gew.-%, besonders bevorzugt mindestens 95 Gew.-% von E Si.

Vorzugsweise hat das Material die allgemeine Formel MnFe(P_{w}GeₓSi_{z}).

Bevorzugt ist x eine Zahl im Bereich von 0,3 bis 0,7, w ist kleiner oder gleich 1-x und z entspricht 1-x-w.

Das Material hat vorzugsweise die kristalline hexagonale Fe₂P-Struktur. Beispiele geeigneter Strukturen sind MnFeP_{0,45 bis 0,7}, Ge_{0,55 bis 0,30} und MnFeP_{0,5 bis 0,70}, (Si/Ge)_{0,5 bis 0,30}.

Geeignete Verbindungen sind ferner Mₙ₁₊ₓFe₁₋ₓP_{1-y}Ge_{y} mit x im Bereich von -0,3 bis 0,5, y im Bereich von 0,1 bis 0,6. Ebenfalls geeignet sind Verbindungen der allgemeinen Formel Mn₁₊ₓFe₁₋ₓP_{1-y}Ge_{y-z}Sb_{z} mit x im Bereich von -0,3 bis 0,5, y im Bereich von 0,1 bis 0,6 und z kleiner als y und kleiner als 0,2. Ferner sind Verbindungen der Formel Mn₁₊xFe₁₋ₓP_{1-y}Ge_{y-z}Si_{z} geeignet mit x Zahl im Bereich von 0,3 bis 0,5, y im Bereich von 0,1 bis 0,66, z kleiner oder gleich y und kleiner als 0,6.

Geeignet sind ferner weitere Fe₂P-basierte Verbindungen ausgehend von Fe₂P und FeAs₂, gegebenenfalls Mn und P. Sie entsprechen beispielsweise den allgemeinen Formeln MnFe₁₋ₓCoₓGe, mit x = 0,7 - 0,9, Mn₅₋ₓFeₓSi₃ mit x = 0 - 5, Mn₅Ge₃₋ₓSiₓ mit x = 0,1 - 2, Mn₅Ge₃₋ₓSbₓ mit x = 0 - 0,3, Mn₂₋ₓFeₓGe₂ mit x = 0,1 - 0,2, Mn₃₋ₓCoₓGaC mit x = 0 - 0,05.

Bevorzugte auf La und Fe basierende Verbindungen der allgemeinen Formeln (II) und/oder (III) und/oder (IV) sind La(Fe_{0,90}Si_{0,10})₁₃, La(Fe_{0,89}Si_{0,11})₁₃, La(Fe_{0,880}Si_{0,120})₁₃, La(Fe_{0,877}Si_{0,123})₁₃, LaFe_{11,8}Si_{1,2}, La(Fe_{0,88}Si_{0,12})₁₃H_{0,5}, La(Fe_{0,88}Si_{0,12})₁₃H_{1,0}, LaFe_{11,7}Si_{1,3}H_{1,1}, LaFe_{11,57}Si_{1,43}H_{1,3}, La(Fe_{0,88}Si_{0,12})H_{1,5}, LaFe_{11,2}Co_{0,7}Si_{1,1}, LaFe_{11,5}Al_{1,5}C_{0,1}, LaFe_{11,5}Al_{1,5}C_{0,2}, LaFe_{11,5}Al_{1,5}C_{0,4}, LaFe_{11,5}Al_{1,5}Co_{0,5}, La(Fe_{0,94}Co_{0,06})_{11,83}Al_{1,17}, La(Fe_{0,92}Co_{0,08})_{11,83}Al_{1,17}.

Geeignete Mangan enthaltende Verbindungen sind MnFeGe, MnFe_{0,9}Co_{0,1}Ge, MnFe_{0,8}Co_{0,2}Ge, MnFe_{0,7}Co_{0,3}Ge, MnFe_{0,6}Co_{0,4}Ge, MnFe_{0,5}Co_{0,5}Ge, MnFe_{0,4}Co_{0,6}Ge, MnFe_{0,3}Co_{0,7}Ge, MnFe_{0,2}Co_{0,8}Ge, MnFe_{0,15}Co_{0,85}Ge, MnFe_{0,1}Co_{0,9}Ge, MnCoGe, Mn₅Ge_{2,5}Si_{0,5}, Mn₅Ge₂Si, Mn₅Ge_{1,5}Si_{1,5}, Mn₅GeSi₂, Mn₅Ge₃, Mn₅Ge_{2,9}Sb_{0,1}, Mn₅Ge_{2,8}Sb_{0,2}, Mn₅Ge_{2,7}Sb_{0,3}, LaMn_{1,9}Fe_{0,1}Ge, LaMn_{1,85}Fe_{0,15}Ge, LaMn_{1,8}Fe_{0,2}Ge, (Fe_{0,9}Mn_{0,1})₃C, (Fe_{0,8}Mn_{0,2})₃C, (Fe_{0,7}Mn_{0,3})₃C, Mn₃GaC, MnAs, (Mn, Fe)As, Mn_{1+δ}As_{0,8}Sb_{0,2}, MnAs_{0,75}Sb_{0,25}, Mn_{1,1}As_{0,75}Sb_{0,25}, Mn_{1,5}As_{0,75}Sb_{0,25}.

Erfindungsgemäß geeignete Heusler-Legierungen sind beispielsweise Ni₂MnGa, Fe₂MnSi₁₋ₓGeₓ mit x = 0 - 1 wie Fe₂MnSi_{0,5}Ge_{0,5}, Ni_{52,9}Mn_{22,4}Ga_{24,7}, Ni_{50,9}Mn_{24,7}Ga_{24,4}, Ni_{55,2}Mn_{18,6}Ga_{26,2}, Ni_{51,6}Mn_{24,7}Ga_{23,8}, Ni_{52,7}Mn_{23,9}Ga_{23,4}, CoMnSb, CoNb_{0,2}Mn_{0,8}Sb, CoNb_{0,4}Mn_{0,6}SB, CoNb_{0,6}Mn_{0,4}Sb, Ni₅₀Mn₃₅Sn₁₅, Ni₅₀Mn₃₇Sn₁₃, MnFeP_{0,45}As_{0,55}, MnFeP_{0,47}As_{0,53}, Mn_{1,1}Fe_{0,9}P_{0,47}As_{0,53}, MnFeP_{0,89-X}Si_{X}Ge_{0,11}, X = 0,22, X = 0,26, X = 0,30, X = 0,33.

Weiterhin geeignet sind Fe₉₀Zr₁₀, Fe₈₂Mn₈Zr₁₀, Co₆₆Nb₉Cu₁Si₁₂B₁₂, Pd₄₀Ni_{22,5}Fe_{17,5}P₂₀, FeMoSiBCuNb, Gd₇₀Fe₃₀, GdNiAl, NdFe₁₂B₆GdMn₂.

Manganite des Perovskit-Typs sind beispielsweise La_{0,6}Ca_{0,4}MnO₃, La_{0,67}Ca_{0,33}MnO₃, La_{0,8}Ca_{0,2}MnO₃, La_{0,7}Ca_{0,3}MnO₃, La_{0,958}Li_{0,025}Ti_{0,1}Mn_{0,9}O₃, La_{0,65}Ca_{0,35}Ti_{0,1}Mn_{0,9}O₃, La_{0,799}Na_{0,199}MnO_{2,97}, La_{0,88}Na_{0,099}Mn_{0,977}O₃, La_{0,877}K_{0,096}Mn_{0,974}O₃, La_{0,65}Sr_{0,35}Mn_{0,95}Cn_{0,05}O₃, La_{0,7}Nd_{0,1}Na_{0,2}MnO₃, La_{0,5}Ca_{0,3}Sr_{0,2}MnO₃.

Auf Gd und Si basierende Verbindungen der allgemeinen Formel (V)

Gd₅(SiₓGe₁₋ₓ)₄

mit x Zahl von 0,2 bis 1
sind beispielsweise Gd₅(Si_{0,5}Ge_{0,5})₄, Gd₅(Si_{0,425}Ge_{0,575})₄, Gd₅(Si_{0,45}Ge_{0,55})₄, Gd₅(Si_{0,365}Ge_{0,635})₄, Gd₅(Si_{0,3}Ge_{0,7})₄, Gd₅(Si_{0,25}Ge_{0,75})₄.

Seltenerden-Elemente enthaltende Verbindungen sind Tb₅(Si₄₋ₓGeₓ) mit x = 0, 1, 2, 3, 4 oder XTiGe mit X = Dy, Ho, Tm, beispielsweise Tb₅Si₄, Tb₅(Si₃Ge), Tb(Si₂Ge₂), Tb₅Ge₄, DyTiGe, HoTiGe, TmTiGe.

Auf Mn und Sb oder As basierende Verbindungen der allgemeinen Formeln (VIII) und (IX) haben bevorzugt die Bedeutungen z = 0,05 bis 0,3, Z = Cr, Cn, Ge, As, Co.

Die erfindungsgemäß eingesetzten thermomagnetischen Materialien können in beliebiger geeigneter Weise hergestellt werden.

Die Herstellung der thermomagnetischen Materialien erfolgt beispielsweise durch Festphasenumsetzung der Ausgangselemente oder Ausgangslegierungen für das Material in einer Kugelmühle, nachfolgendes Verpressen, Sintern und Tempern unter Inertgasatmosphäre und nachfolgendes langsames Abkühlen auf Raumtemperatur. Ein derartiges Verfahren ist beispielsweise in J. Appl. Phys. 99, 2006, 08Q107 beschrieben.

Auch eine Verarbeitung über das Schmelzspinnen ist möglich. Hierdurch ist eine homogenere Elementverteilung möglich, die zu einem verbesserten magnetokalorischen Effekt führt, vergleiche Rare Metals, Vol. 25, Oktober 2006, Seiten 544 bis 549. In dem dort beschriebenen Verfahren werden zunächst die Ausgangselemente in einer Argongas-Atmosphäre induktionsgeschmolzen und sodann in geschmolzenem Zustand über eine Düse auf eine sich drehende Kupferwalze gesprüht. Es folgt ein Sintern bei 1000 °C und ein langsames Abkühlen auf Raumtemperatur.

Ferner kann für die Herstellung auf WO 2004/068512 verwiesen werden. Die nach diesen Verfahren erhaltenen Materialien zeigen allerdings häufig eine große thermische Hysterese. Beispielsweise werden in Verbindungen des Fe₂P-Typs, die mit Germanium oder Silicium substituiert sind, große Werte für die thermische Hysterese in einem großen Bereich von 10 K oder mehr beobachtet. Erfindungsgemäß haben die magnetokalorischen Materialien vorzugsweise eine geringe thermische Hysterese von weniger als 5 °C, besonders bevorzugt von weniger als 3 °C, insbesondere von weniger als 2°C.

Die thermische Hysterese kann signifikant vermindert werden und ein großer magnetokalrischer Effekt kann erreicht werden, wenn die metallbasierten Materialien nach dem Sintern und/oder Tempern nicht langsam auf Umgebungstemperatur abgekühlt werden, sondern mit einer hohen Abkühlgeschwindigkeit abgeschreckt werden. Dabei beträgt die Abkühlgeschwindigkeit mindestens 100 K/s. Bevorzugt beträgt die Abkühlgeschwindigkeit 100 bis 10000 K/s, besonders bevorzugt 200 bis 1300 K/s. Speziell bevorzugt sind Abkühlgeschwindigkeiten von 300 bis 1000 K/s.

Das Abschrecken kann dabei durch beliebige geeignete Kühlverfahren erreicht werden, beispielsweise durch Abschrecken des Festkörpers mit Wasser oder wasserhaltigen Flüssigkeiten, beispielsweise gekühltem Wasser oder Eis/Wasser-Mischungen. Die Festkörper können beispielsweise in eisgekühltes Wasser fallengelassen werden. Es ist ferner möglich, die Festkörper mit untergekühlten Gasen wie flüssigem Stickstoff abzuschrecken. Weitere Verfahren zum Abschrecken sind dem Fachmann bekannt. Vorteilhaft ist dabei ein kontrolliertes und schnelles Abkühlen.

Die übrige Herstellung der thermomagnetischen Materialien ist weniger kritisch, solange im letzten Schritt das Abschrecken des gesinterten und/oder getemperten Festkörpers mit der erfindungsgemäßen Abkühlgeschwindigkeit erfolgt. Das Verfahren kann dabei auf die Herstellung beliebiger geeigneter thermomagnetischer Materialien für die magnetische Kühlung angewendet werden, wie sie vorstehend beschreiben sind.

In Schritt (a) des Verfahrens erfolgt die Umsetzung der Elemente und/oder Legierungen, die im späteren thermomagnetischen Material enthalten sind, in einer Stöchiometrie, die dem thermomagnetischen Material entspricht, in der Fest- oder Flüssigphase.

Vorzugsweise wird die Umsetzung in Stufe a) durch gemeinsames Erhitzen der Elemente und/oder Legierungen in einem geschlossenen Behältnis oder in einem Extruder, oder durch Festphasenumsetzung in einer Kugelmühle erfolgen. Besonders bevorzugt wird eine Festphasenumsetzung durchgeführt, die insbesondere in einer Kugelmühle erfolgt. Eine derartige Umsetzung ist prinzipiell bekannt, vergleiche die vorstehend aufgeführten Schriften. Dabei werden typischerweise Pulver der einzelnen Elemente oder Pulver von Legierungen aus zwei oder mehr der einzelnen Elemente, die im späteren thermomagnetischen Material vorliegen, in geeigneten Gewichtsanteilen pulverförmig vermischt. Falls notwendig, kann zusätzlich ein Mahlen des Gemisches erfolgen, um ein mikrokristallines Pulvergemisch zu erhalten. Dieses Pulvergemisch wird vorzugsweise in einer Kugelmühle aufgeheizt, was zu einer weiteren Verkleinerung wie auch guten Durchmischung und zu einer Festphasenreaktion im Pulvergemisch führt. Alternativ werden die einzelnen Elemente in der gewählten Stöchiometrie als Pulver vermischt und anschließend aufgeschmolzen.

Das gemeinsame Erhitzen in einem geschlossenen Behälter erlaubt die Fixierung flüchtiger Elemente und die Kontrolle der Stöchiometrie. Gerade bei Mitverwendung von Phosphor würde dieser in einem offenen System leicht verdampfen.

An die Umsetzung schließt sich ein Sintern und/oder Tempern des Festkörpers an, wobei ein oder mehrere Zwischenschritte vorgesehen sein können. Beispielsweise kann der in Stufe a) erhaltene Feststoff einer Formgebung unterzogen werden, bevor er gesintert und/oder getempert wird.

Alternativ ist es möglich, den aus der Kugelmühle erhaltenen Feststoff einem Schmelzspinnverfahren zuzuführen. Schmelzspinnverfahren sind an sich bekannt und beispielsweise in Rare Metals, Vol. 25, Oktober 2006, Seiten 544 bis 549 wie auch in WO 2004/068512 beschrieben. Auf die teilweise erhaltene große thermische Hysterese wurde bereits hingewiesen.

Dabei wird die in Stufe a) erhaltene Zusammensetzung geschmolzen und auf eine sich drehende kalte Metallwalze gesprüht. Dieses Sprühen kann mittels Überdruck vor der Sprühdüse oder Unterdruck hinter der Sprühdüse erreicht werden. Typischerweise wird eine sich drehende Kupfertrommel oder -walze verwendet, die zudem gegebenenfalls gekühlt werden kann. Die Kupfertrommel dreht sich bevorzugt mit einer Oberflächengeschwindigkeit von 10 bis 40 m/s, insbesondere 20 bis 30 m/s. Auf der Kupfertrommel wird die flüssige Zusammensetzung mit einer Geschwindigkeit von vorzugsweise 10² bis 10⁷ K/s abgekühlt, besonders bevorzugt mit einer Geschwindigkeit von mindestens 10⁴ K/s, insbesondere mit einer Geschwindigkeit von 0,5 bis 2 x 10⁶ K/s.

Das Schmelzspinnen kann wie auch die Umsetzung in Stufe a) unter vermindertem Druck oder unter Inertgasatmosphäre durchgeführt werden.

Durch das Meltspinning wird eine hohe Verarbeitungsgeschwindigkeit erreicht, da das nachfolgende Sintern und Tempern verkürzt werden kann. Gerade im technischen Maßstab wird so die Herstellung der thermomagnetischen Materialien wesentlich wirtschaftlicher. Auch die Sprühtrocknung führt zu einer hohen Verarbeitungsgeschwindigkeit. Besonders bevorzugt wird das Schmelzespinnen (Meltspinning) durchgeführt.

Alternativ kann in Stufe b) ein Sprühkühlen durchgeführt werden, bei dem eine Schmelze der Zusammensetzung aus Stufe a) in einen Sprühturm gesprüht wird. Der Sprühturm kann dabei beispielsweise zusätzlich gekühlt werden. In Sprühtürmen werden häufig Abkühlgeschwindigkeiten im Bereich von 10³ bis 10⁵ K/s, insbesondere etwa 10⁴ K/s erreicht.

Das Sintern und/oder Tempern des Festkörpers erfolgt in Stufe c) vorzugsweise zunächst bei einer Temperatur im Bereich von 800 bis 1400 °C zum Sintern und nachfolgend bei einer Temperatur im Bereich von 500 bis 750 °C zum Tempern. Beispielsweise kann dann das Sintern bei einer Temperatur im Bereich von 500 bis 800 °C erfolgen. Für Formkörper/Festkörper erfolgt das Sintern besonders bevorzugt bei einer Temperatur im Bereich von 1000 bis 1300 °C, insbesondere von 1100 bis 1300 °C. Das Tempern kann dann beispielsweise bei 600 bis 700 °C erfolgen.

Das Sintern wird vorzugsweise für einen Zeitraum von 1 bis 50 Stunden, besonders bevorzugt 2 bis 20 Stunden, insbesondere 5 bis 15 Stunden durchgeführt. Das Tempern wird vorzugsweise für eine Zeit im Bereich von 10 bis 100 Stunden, besonders bevorzugt 10 bis 60 Stunden, insbesondere 30 bis 50 Stunden durchgeführt. Die exakten Zeiträume können dabei je nach Material den praktischen Anforderungen angepasst werden.

Bei Einsatz des Schmelzspinnverfahrens kann der Zeitraum für ein Sintern oder Tempern stark verkürzt werden, beispielsweise auf Zeiträume von 5 Minuten bis 5 Stunden, bevorzugt 10 Minuten bis 1 Stunde. Im Vergleich zu den sonst üblichen Werten von 10 Stunden für das Sintern und 50 Stunden für das Tempern resultiert ein extremer Zeitvorteil.

Durch das Sintern/Tempern kommt es zu einem Anschmelzen der Korngrenzen, so dass sich das Material weiter verdichtet.

Durch das Schmelzen und schnelle Abkühlen in Stufe b) kann damit die Zeitdauer für Stufe c) erheblich vermindert werden. Dies ermöglicht auch eine kontinuierliche Herstellung der thermomagnetischen Materialien.

Das Verpressen kann beispielsweise als kaltes Verpressen oder als Heißverpressen durchgeführt werden. An das Verpressen kann sich das bereits beschriebene Sinterverfahren anschließen.

Beim Sinterverfahren oder Sintermetallverfahren werden die Pulver des thermomagnetischen Materials zunächst in die gewünschte Form des Formkörpers gebracht, und sodann durch Sintern miteinander verbunden, wodurch der gewünschte Formkörper erhalten wird. Das Sintern kann ebenfalls wie vorstehend beschrieben durchgeführt werden.

Ferner ist es erfindungsgemäß möglich, das Pulver des thermomagnetischen Materials in ein polymeres Bindemittel einzubringen, die resultierende thermoplastische Formmasse einer Formgebung zu unterziehen, das Bindemittel zu entfernen und den resultierenden Grünkörper zu sintern. Es ist auch möglich, das Pulver des thermomagnetischen Materials mit einem polymeren Bindemittel zu beschichten und durch Verpressen, gegebenenfalls unter Wärmebehandlung, einer Formgebung zu unterziehen.

Es können erfindungsgemäß dabei beliebige geeignete organische Bindemittel eingesetzt werden, die als Bindemittel für thermomagnetische Materialien einsetzbar sind. Dabei handelt es sich insbesondere um oligomere oder polymere Systeme, jedoch können auch niedermolekulare organische Verbindungen wie beispielsweise Zucker eingesetzt werden.

Das thermomagnetische Pulver wird mit einem der geeigneten organischen Bindemittel vermischt und in eine Form gefüllt. Dies kann beispielsweise durch Gießen oder Spritzgießen oder durch Extrusion erfolgen. Sodann wird das Polymer katalytisch oder thermisch entfernt und soweit gesintert, dass ein poröser Körper mit Monolith-Struktur gebildet wird.

Auch eine Heißextrusion oder ein Metallspritzguss (MIM) des thermomagnetischen Materials ist möglich, ebenso wie ein Aufbau aus dünnen Blechen, die durch Walzverfahren zugänglich sind. Beim Spritzgießen weisen die Kanäle im Monolithen eine konische Form auf, um die Gusskörper aus der Form entfernen zu können. Beim Aufbau aus Blechen können alle Kanalwandungen parallel verlaufen.

Die jeweiligen Verfahren werden so gesteuert, dass Wärmetauscherbetten resultieren, die eine geeignete Kombination aus hoher Wärmeübertragung, geringem Durchflusswiderstand und hoher magnetokalorischer Dichte aufweisen. Bevorzugt ist dabei ein optimales Verhältnis von hoher magnetokalorischer Dichte und ausreichender Porosität, so dass eine effiziente Wärmeabführung bzw. ein effizienter Wärmetausch gewährleistet sind. Anders ausgedrückt zeigen die erfindungsgemäßen Formkörper ein hohes Verhältnis von Oberfläche zu Volumen. Durch die große Oberfläche ist es möglich, große Wärmemengen aus dem Material herauszutransportieren und in ein Wärmeüberträgermedium einzubringen. Die Struktur sollte mechanisch stabil sein, um den mechanischen Belastungen durch ein fluides Kühlmedium gewachsen zu sein. Zudem sollte der Fließwiderstand so gering sein, dass nur ein geringer Druckabfall durch das poröse Material resultiert. Das magnetische Feldvolumen sollte vorzugsweise minimiert werden.

Die unterschiedlichen magnetokalorischen Materialien mit unterschiedlichen Curie-Temperaturen, die erfindungsgemäß eingesetzt werden, können ausgehend von einem magnetokalorischen Material durch Variation einzelner Bestandteile oder der Mengen einzelner Bestandteile erhalten werden. Es können auch gänzlich unterschiedliche magnetokalorische Materialien miteinander kombiniert werden, sofern die erfindungsgemäße Abfolge der Curie-Temperaturen eingehalten wird.

Die Gesamtdifferenz der Curie-Temperaturen zwischen dem Material mit höchster Curie-Temperatur und dem Material mit geringster Curie-Temperatur beträgt vorzugsweise 3 bis 80 °C, besonders bevorzugt 10 bis 50 °C. Beispielsweise kann bei einer Zusammenstellung fünf unterschiedlicher Materialien mit einer Curie-Temperaturdifferenz von 2 °C zwischen jeweils zwei Materialien in der Kaskade eine Temperaturspanne von 8 °C ergeben. Durch Verwendung mehrerer Materialien mit unterschiedlicher Curie-Temperatur ist es möglich, eine wesentlich größere Temperaturspanne zu erreichen, als es unter dem Einsatz eines einzelnen magnetokalorischen Materials möglich ist.

Die erfindungsgemäß erhaltenen Wärmetauscherbetten werden bevorzugt in Kühlschränken, Klimaanlagen, Wärmepumpen bzw. Wärmetauschern oder in der Stromerzeugung durch direkte Umwandlung von Wärme verwendet. Dabei sollten die Materialien einen großen magnetokalorischen Effekt in einem Temperaturintervall zwischen - 100 °C und +150 °C zeigen.

Die Wärmeübergangsrate limitiert die Zyklusgeschwindigkeit und hat damit einem großen Einfluss auf die Leistungsdichte.

Bei der Stromgewinnung ist um das thermomagnetische Material eine Spule aus einem elektrisch leitfähigen Material angeordnet. In dieser Spule wird durch Veränderung des Magnetfeldes bzw. der Magnetisierung ein Strom induziert, der zur Verrichtung von elektrischer Arbeit verwendet werden kann. Vorzugsweise werden dabei die Spulengeometrie und die Geometrie des thermomagnetischen Materials so gewählt, dass eine möglichst hohe Energieausbeute mit einem möglichst geringen Druckverlust resultiert. Die Spulenwindungsdichte (Windungen/Länge), die Spulenlänge, der Ladungswiderstand und die Temperaturveränderung des thermomagnetischen Materials sind wichtige Einflussgrößen für die Energieausbeute.

Das thermomagnetische Material befindet sich in einem äußeren Magnetfeld. Dieses Magnetfeld kann durch Permanentmagnete oder Elektromagnete erzeugt werden. Elektromagnete können herkömmliche Elektromagnete oder supraleitende Magnete sein.

Vorzugsweise ist der thermomagnetische Generator so ausgelegt, dass die Wärmeenergie aus der Geothermie oder aus der Abwärme industrieller Prozesse oder aus Solarenergie oder Sonnenkollektoren, z. B. in der Photovoltaik umgewandelt werden kann. Gerade in Regionen mit geothermischer Aktivität erlaubt der erfindungsgemäße thermomagnetische Generator eine einfache Stromerzeugung unter Ausnutzung der Erdwärme. In industriellen Prozessen fällt häufig Prozesswärme oder Abwärme an, die üblicherweise in die Umgebung abgeleitet und nicht weiter genutzt wird. Auch Abwässer weisen häufig eine höhere Temperatur beim Austritt als beim Eintritt auf. Gleiches gilt für Kühlwasser. Damit erlaubt der thermomagnetische Generator die Gewinnung von elektrischer Energie aus Abwärme, die ansonsten verloren geht. Dadurch, dass der thermomagnetische Generator im Bereich der Raumtemperatur betrieben werden kann, ist es möglich, diese Abwärmen zu nutzen und in elektrische Energie umzuwandeln. Die Energieumwandlung erfolgt dabei vorzugsweise bei Temperaturen im Bereich von 20 bis 150 °C, besonders bevorzugt bei Temperaturen im Bereich von 40 bis 120 °C.

In (konzentrierten) Photovoltaikanlagen werden häufig hohe Temperaturen erreicht, so dass gekühlt werden muss. Diese abzuführende Wärme kann erfindungsgemäß in Strom ungewandelt werden.

Zur Stromerzeugung wird das thermomagnetische Material abwechselnd mit einem warmen Reservoir und einem kalten Reservoir kontaktiert und damit einem Aufwärm- und Abkühlungszyklus unterworfen. Die Zykluszeit wird dabei nach den jeweiligen technischen Voraussetzungen gewählt.

Die nachfolgenden Beispiele beschreiben die Herstellung für die erfindungsgemäße Anwendung geeigneter thermomagnetischer Materialien und die Auslegung von Monolithen und Katalysatorbetten sowie die Herstellung einer erfindungsgemäßen Kaskade magnetokalorischer Materialien.

### Beispiele

### Beispiel 1 (erfindungsgemäss)

Evakuierte Quarzampullen, die gepresste Proben von MnFePGe enthielten, wurden für 10 Stunden bei 1100 °C gehalten, um das Pulver zu sintern. Auf dieses Sintern folgte ein Tempern bei 650 °C für 60 Stunden, um eine Homogenisierung herbeizuführen. Anstelle eines langsamen Abkühlens im Ofen auf Raumtemperatur wurden die Proben jedoch sofort in Wasser bei Raumtemperatur gequencht. Das Quenchen in Wasser verursachte einen gewissen Grad von Oxidation an den Probenoberflächen. Die äußere oxidierte Schale wurde durch Ätzen mit verdünnter Säure entfernt. Die XRD-Muster zeigen, dass alle Proben in einer Struktur des Fe₂P-Typs kristallisieren.

Folgende Zusammensetzungen wurden dabei erhalten:
Mn_{1,1}Fe_{0,9}P_{0,81}Ge_{0,19}; Mn_{1,1}Fe_{0,9}P_{0,78}Ge_{0,22}, Mn_{1,1}Fe_{0,9}P_{0,75}Ge_{0,25} und Mn_{1,2}Fe_{0,8}P_{0,81}Ge_{0,19}. Die beobachteten Werte für die thermische Hysterese sind für diese Proben in der angegebenen Reihenfolge 7 K, 5 K, 2 K und 3 K. Gegenüber einer langsam abgekühlten Probe war die eine thermische Hysterese von mehr als 10 K aufweist, konnte die thermische Hysterese stark vermindert werden.

Die thermische Hysterese wurde dabei in einem Magnetfeld von 0,5 Tesla bestimmt.

Die Curie-Temperatur kann durch Variation des Mn/Fe-Verhältnisses und der Ge-Konzentration eingestellt werden, ebenso der Wert für die thermische Hysterese.

Die Änderung der magnetischen Entropie, berechnet aus der Gleichstrommagnetisierung unter Verwendung der Maxwell-Beziehung beträgt für eine maximale Feldänderung von 0 bis 2 Tesla für die ersten drei Proben 14 J/kgK, 20 J/kgK bzw. 12,7 J/kgK.

Die Curie-Temperatur und die thermische Hysterese nehmen mit zunehmendem Mn/Fe-Verhältnis ab. Im Ergebnis zeigen die MnFePGe-Verbindungen relativ große MCE-Werte in niedrigem Feld. Die thermische Hysterese dieser Materialien ist sehr klein.

### Beispiel 2 (erfindungsgemäss)

### Schmelzspinnen von MnFeP(GeSb)

Die polykristallinen MnFeP(Ge,Sb)-Legierungen wurden zunächst in einer Kugelmühle mit hohem Energie-Eintrag und durch Festphasenreaktionsverfahren hergestellt, wie sie in WO 2004/068512 und J. Appl. Phys. 99,08 Q107 (2006) beschrieben sind. Die Materialstücke wurden sodann in ein Quarzrohr mit einer Düse gegeben. Die Kammer wurde auf ein Vakuum von 10⁻² mbar evakuiert und anschließend mit Argongas hoher Reinheit gefüllt. Die Proben wurden durch Hochfrequenz geschmolzen und durch die Düse versprüht aufgrund einer Druckdifferenz zu einer Kammer mit einer rotierenden Kupfertrommel. Die Oberflächengeschwindigkeit des Kupferrades konnte eingestellt werden, und Abkühlgeschwindigkeiten von etwa 10⁵ K/s wurden erreicht. Anschließend wurden die gesponnenen Bänder bei 900 °C für eine Stunde getempert.

Aus der Röntgendiffraktometrie geht hervor, dass alle Proben im hexagonalen Fe₂P-Strukturmuster kristallisieren. Im Unterschied zu nicht nach dem Schmelzspinnverfahren hergestellten Proben, wurde keine kleinere Verunreinigungsphase von MnO beobachtet.

Die erhaltenen Werte für die Curie-Temperatur, die Hysterese und die Entropie wurden für unterschiedliche Umfangsgeschwindigkeiten beim Schmelzspinnen bestimmt. Die Ergebnisse sind in den nachstehenden Tabellen 1 und 2 aufgeführt. Jeweils wurden geringe Hysterese-Temperaturen bestimmt.

**Tabelle 1:**

| **Bänder** | **V (m/s)** | **T_{C} (K)** | **ΔT_{hys} (K)** | **-ΔS(J/kgK)** |
|---|---|---|---|---|
| Mn_{1,2}Fe_{0,8}P_{0,73}Ge_{0,25}Sb_{0,02} | 30 | 269 | 4 | 12,1 |
| Mn_{1,2}Fe_{0,8}P_{0,70}Ge_{0,20}Sb_{0,10} | 30 | 304 | 4,5 | 19,0 |
| | 45 | 314 | 3 | 11,0 |
| MnFeP_{0,70}Ge_{0,20}Sb_{0,10} | 20 | 306 | 8 | 17,2 |
| | 30 | 340 | 3 | 9,5 |
| MnFeP_{0,75}Ge_{0,25} | 20 | 316 | 9 | 13,5 |
| | 40 | 302 | 8 | - |
| Mn_{1,1}Fe_{0,9}P_{0,78}Ge_{0,22} | 20 | 302 | 5 | - |
| | 40 | 299 | 7 | - |
| Mn_{1,1}Fe_{0,9}P_{0,75}Ge_{0,25} | 30 | 283 | 9 | 11,2 |
| Mn_{1,2}Fe_{0,8}P_{0,75}Ge_{0,25} | 30 | 240 | 8 | 14,2 |
| Mn_{1,1}Fe_{0,9}P_{0,73}Ge_{0,27} | 30 | 262 | 5 | 10,1 |

| **Bulk** | | **T_{C} (K)** | **ΔT_{hys} (K)** | **-ΔS(J/kgK)** |
|---|---|---|---|---|
| MnFeP_{0,75}Ge_{0,25} | | 327 | 3 | 11,0 |
| Mn_{1,1}Fe_{0,9}P_{0,81}Ge_{0,19} | | 260 | 7 | 14,0 |
| Mn_{1,1}Fe_{0,9}P_{0,78}Ge_{0,22} | | 296 | 5 | 20,0 |
| Mn_{1,1}Fe_{0,9}P_{0,75}Ge_{0,25} | | 330 | 2 | 13,0 |
| Mn_{1,2}Fe_{0,8}P_{0,81}Ge_{0,19} | | 220 | 3 | 7,7 |
| Mn_{1,2}Fe_{0,8}P_{0,75}Ge_{0,25} | | 305 | 3 | - |
| Mn_{1,2}Fe_{0,8}P_{0,73}Ge_{0,27} | | 313 | 5 | - |
| Mn_{1,3}Fe_{0,7}P_{0,78}Ge_{0,22} | | 203 | 3 | 5,1 |
| Mn_{1,3}Fe_{0,7}P_{0,75}Ge_{0,25} | | 264 | 1 | - |

**Tabelle 2**

| **Bulk** | **T_{C} (K)** | **ΔT_{hys} (K)** | **-ΔS(J/kgK)** |
|---|---|---|---|
| MnFeP_{0,75}Ge_{0,25} | 327 | 3 | 11,0 |
| Mn_{1,16}Fe_{0,84}P_{0,75}Ge_{0,25} | 330 | 5 | 22,5 |
| Mn_{1,18}Fe_{0,82}P_{0,75}Ge_{0,25} | 310 | 3 | 16,1 |
| Mn_{1,20}Fe_{0,80}P_{0,75}Ge_{0,25} | 302 | 1 | 12,0 |
| Mn_{1,22}Fe_{0,78}P_{0,75}Ge_{0,25} | 276 | 4 | 11,7 |
| Mn_{1,26}Fe_{0,74}P_{0,75}Ge_{0,25} | 270 | 1 | 8,5 |
| Mn_{1,1}Fe_{0,9}P_{0,81}Ge_{0,19} | 260 | 6 | 13,8 |
| Mn_{1,1}Fe_{0,9}P_{0,78}Ge_{0,22} | 296 | 4 | 20,0 |
| Mn_{1,1}Fe_{0,9}P_{0,77}Ge_{0,23} | 312 | 2 | 14,6 |
| Mn_{1,1}Fe_{0,9}P_{0,75}Ge_{0,25} | 329 | 2 | 13,0 |

| **Bänder** | | | |
|---|---|---|---|
| Mn_{1,20}Fe_{0,80}P_{0,75}Ge_{0,25} | 288 | 1 | 20,3 |
| Mn_{1,22}Fe_{0,78}P_{0,75}Ge_{0,25} | 274 | 2 | 15,3 |
| Mn_{1,24}Fe_{0,76}P_{0,75}Ge_{0,25} | 254 | 2 | 16,4 |
| Mn_{1,26}Fe_{0,74}P_{0,75}Ge_{0,25} | 250 | 4 | 14,4 |
| Mn_{1,30}Fe_{0,70}P_{0,75}Ge_{0,25} | 230 | 0 | 9,8 |

### Beispiel 3

Ein einfacher magnetokalorischer Regenerator, aufgebaut aus einem gepackten oder strukturierten Bett einer Kaskade von magnetokalorischen Materialien, einer Magnetanordnung und einem Wärmetransferfluid wurde mit den folgenden Ergebnissen untersucht:

### 1. Für vorgegebene Betriebsbedingungen:

| Form des magnetokalorischen Materials | Leistung (W) | Druckverlust (Pa) |
|---|---|---|
| Kugeln, d = 0,3 mm (erfindungsgemäss) | 160,5 | 1,8 x 10⁴ |
| Kugeln, d = 0,05 mm (erfindungsgemäss) | 162,9 | 5,6 x 10⁵ |
| Kugeln, d = 0,03 mm (erfindungsgemäss) | 163,0 | 1,52 x 10⁶ |
| Monolith, Kanäle mit quadratischem Querschnitt, Seitenlänge 0,3 mm (nicht erfindungsgemäss) | 154,6 | 1,71 x 10³ |
| Zylinder, d = h = 5 mm (erfindungsgemäss) | Wärmetransfer zu langsam, um einen Temperaturgradienten aufzubauen | |
| Zylinder, d = h = 0,5 mm (erfindungsgemäss) | 154,3 | 9,11 x 10³ |

Es ist ersichtlich, dass Kugeln mit 0,3 mm Durchmesser gute Wärmetransferleistungen ergeben, wobei nur geringe Druckverluste auftraten (insbesondere im Monolithen).

### 2. Für Betrieb bei unterschiedlichen Frequenzen (wobei alle anderen Betriebsbedingungen gleich bleiben):

In der nachstehenden Tabelle ist die Nettoleistung (das ist die Kühlleistung minus der Leistung, die für das Pumpen des Wärmetransferfluids benötigt wird) bei unterschiedlichen Betriebsfrequenzen aufgeführt:

| Form des magnetokalorischen Materials | Leistung bei unterschiedlichen Betriebsfrequenzen (W) | | |
|---|---|---|---|
| | 1 Hz | 5 Hz | 10 Hz |
| Monolithen, quadratische Kanäle, Seitenlänge 0,1 mm (nicht erfindungsgemäss) | 153,2 | 645,2 | 1024,6 |
| Monolithen, quadratische Kanäle, Seitenlänge 0,3 mm (nicht erfindungsgemäss) | 108,6 | 0* | 0* |
| Kugeln, d = 0,05 mm (erfindungsgemäss) | 96,1 | 522,2 | 986,1 |
| Kugeln, d = 0,3 mm (erfindungsgemäss) | 90,1 | 259,1 | 0* |

| | | | |
|---|---|---|---|
| Bemerkung: 0* bedeutet, dass die für das Pumpen des Fluids erforderliche Leistung größer ist als die gewonnene Kühlleistung. | | | |

### Beispiel 4 (erfindungsgemäss)

Wärmetauscherbett aus einer Kaskade von mindestens fünf magnetokalorischen Materialien.

Nach dem in Beispiel 1 beschriebenen Verfahren wurden fünf unterschiedliche magnetokalorische Materialien mit Curie-Temperaturen von 290,4 K, 293,1 K, 296,1 K, 299,1 K und 301,5 K erhalten. Die Temperaturspanne betrug so 11,1 K. Die jeweiligen magnetokalorischen Materialien waren MnFePAs-Legierungen unterschiedlicher Zusammensetzung.

Das Material wurde in Form von Granulat mit einem mittleren Teilchendurchmesser von 300 - 450 µm in ein magnetokalorisches Materialbett gefüllt. Das Materialbett wies einen Durchmesser von 15 mm und einer Bettlänge von 50 mm auf. Die unterschiedlichen magnetokalorischen Materialien waren in einem Abstand zueinander angeordnet, wobei als thermischer und elektrischer Isolator ein Kohlenstoffnetz zum Einsatz kam.

Das gepackte Bett der magnetokalorischen Materialien wies die jeweiligen magnetokalorischen Materialbetten hintereinandergepackt auf und wurde ortsfest verankert.

Neben der Kaskade der magnetokalorischen Materialien wurde ein Magnet auf einer Rotationsachse befestigt, die senkrecht zur Längsachse des magnetokalorischen Materialbetts stand. Durch Rotation des Magneten um seine Achse überstrichen die beiden Pole des Magneten abwechselnd die magnetokalorische Materialkaskade. Die magnetische Feldstärke betrug zwischen den Magneten 650 bis 800 mT.

Der drehbare Magnet rotierte mit einer Umdrehungsfrequenz von etwa 1 Hz.

Das magnetokalorische Material wurde von Ethanol als Wärmeträgerfluid durchströmt, wobei das Volumen des pro Magnetumdrehung gepumpten Fluids 1 bis 5 mL betrug. Die zwischen den Bettenenden beobachtete Temperaturdifferenz im ersten Durchlauf betrug etwa 8 K.

### Beispiel 5 (nicht erfindungsgemäss)

### Simulation einer Kaskade von 25 magnetokalorischen Materialien

In einer Computersimulation wurde eine Kaskade von 25 magnetokalorischen Materialien mit Curie-Temperaturen von - 2 °C bis 46 °C und einer Differenz der Curie-Temperaturen zwischen zwei benachbarten magnetokalorischen Materialien von 2 °C simuliert.

Das Gesamtgewicht an magnetokalorischem Material betrug 806 g, die Gesamtmenge an durchgepumpten Fluid 29,1 g. Die Porosität des Wärmetauscherbetts betrug 25 %. Die thermische und elektrische Isolation hatte eine Dicke von 1 mm, wobei ein Lambda-Wert von 0,15 W/m K erreicht wurde. Bei einer Magnet-Umdrehungsfrequenz von 2 Hz wurde bei einer Temperaturspanne von 1 °C bis 46 °C und einer pro Zyklus gepumpten Fluidmenge von 12,8 mL eine Kühlleistung von 186 W unter den vorstehenden Annahmen errechnet.

### Beispiel 6 (nicht erfindungsgemäss)

### Simulation der Bedeutung einer ausreichenden Isolation um das magnetokalorische Bett herum

Die Kaskade von 25 magnetokalorischen Materialien gemäß Beispiel 5 wurde mit einer 1 mm dicken Isolation umgeben mit einem Wert von k = 0,15 W/m K. Hierdurch wurde es möglich, dass sich ein Temperaturprofil von 1 °C bis 46 °C durch das magnetokalorische Bett hindurch aufbaute, und eine durchschnittliche Kühlleistung von 186 W konnte errechnet werden.

Wenn das Isolationsbett aus rostfreiem Stahl aufgebaut ist mit einem Wert k = 16 W/m K, werden bei einer Wanddicke von 1 mm ohne Einsatz weiterer Isolation die Wärmeverluste so groß, dass kein Temperaturgradient im magnetokalorischen Bett aufgebaut werden konnte. Der Temperaturgradient durch das Bett hindurch errechnet sich in diesem Fall zu nur 0,3 °C.

## Patentansprüche

1. Wärmetauscherbett aus einer Kaskade von mindestens drei unterschiedlichen magnetokalorischen Materialien mit unterschiedlichen Curie-Temperaturen, die gemäß aufsteigender oder absteigender Curie-Temperatur aneinandergereiht und vorzugsweise jeweils durch dazwischenliegende thermische und/oder elektrische Isolatoren voneinander isoliert sind, wobei die Differenz der Curie-Temperaturen benachbarter magnetokalorischer Materialien 0,5 bis 2,5 °C beträgt, das Wärmetauscherbett ein gepacktes Bett aus Teilchen der magnetokalorischen Materialien ist und sich im gepackten Bett eine Porosität vom 40 bis 45 % ergibt.

2. Wärmetauscherbett nach Anspruch 1, **dadurch gekennzeichnet, dass** die Differenz der Curie-Temperaturen benachbarter magnetokalorischer Materialien 1,5 bis 2,5 °C beträgt.

3. Wärmetauscherbett nach Anspruch 2, **dadurch gekennzeichnet, dass** die Differenz der Curie-Temperaturen benachbarter magnetokalorischer Materialien 1,8 bis 2,2 °C beträgt.

4. Wärmetauscherbett nach einem der Ansprüche 1 bis 3, **dadurch gekennzeichnet, dass** im Wärmetauscherbett 5 bis 50 unterschiedliche magnetokalorische Materialien vorliegen.

5. Wärmetauscherbett nach einem der Ansprüche 1 bis 4, **dadurch gekennzeichnet, dass** die thermischen und/oder elektrischen Isolatoren aus einem organischen Polymer, einer Keramik, anorganischen Oxiden, Kohlenstofffasern oder -netzen, Gläsern, Halbleitern oder Kombinationen daraus aufgebaut sind.

6. Wärmetauscherbett nach einem der Ansprüche 1 bis 5, **dadurch gekennzeichnet, dass** die thermischen und/oder elektrischen Isolatoren eine Matrix bilden, in die die magnetokalorischen Materialien eingebettet sind.

7. Wärmetauscherbett nach einem der Ansprüche 1 bis 6, **dadurch gekennzeichnet, dass** benachbarte magnetokalorische Materialien einen Abstand von 0,05 bis 3 mm aufweisen.

8. Wärmetauscherbett nach einem der Ansprüche 1 bis 7, **dadurch gekennzeichnet, dass** die magnetokalorischen Materialien und thermischen und/oder elektrischen Isolatoren eine Schichtenfolge bilden, wobei die Schichtdicke der magnetokalorischen Materialien jeweils 1 bis 100 mm beträgt.

9. Wärmetauscherbett nach einem der Ansprüche 1 bis 8, **dadurch gekennzeichnet, dass** es ein gepacktes Wärmetauscherbett aus thermomagnetischen Materialteilchen ist, die einen mittleren Durchmesser im Bereich von 50 µm bis 1 mm aufweisen.

10. Wärmetauscherbett nach einem der Ansprüche 1 bis 9, **dadurch gekennzeichnet, dass** die thermomagnetischen Materialien ausgewählt sind aus
(1) Verbindungen der allgemeinen Formel (I)
(A_{y}B_{1-y})_{2+δ}C_{w}DₓE_{z} (I)
mit der Bedeutung
A Mn oder Co,
B Fe, Cr oder Ni,
C, D, E mindestens zwei von C, D, E sind voneinander verschieden, haben eine nicht verschwindende Konzentration und sind ausgewählt aus P, B, Se, Ge, Ga, Si, Sn, N, As und Sb, wobei mindestens eines von C, D und E Ge oder Si ist,
δ Zahl im Bereich von - 0,1 bis 0,1
w, x, y, z Zahlen im Bereich von 0 bis 1, wobei w + x + z = 1 ist;
(2) auf La und Fe basierenden Verbindungen der allgemeinen Formeln (II) und/oder (III) und/oder (IV)
La(FeₓAl₁₋ₓ)₁₃H_{y} oder La(FeₓSi₁₋ₓ)₁₃H_{y} (II)
mit
x Zahl von 0,7 bis 0,95
y Zahl von 0 bis 3;
La(FeₓAl_{y}Co_{z})₁₃ oder La(FeₓSi_{y}Co_{z})₁₃ (III)
mit
x Zahl von 0,7 bis 0,95
y Zahl von 0,05 bis 1 - x
z Zahl von 0,005 bis 0,5;
LaMnₓFe₂₋ₓGe (IV)
mit
x Zahl von 1,7 bis 1,95 und
(3) Heusler-Legierungen des Typs MnTP mit T Übergangsmetall und P einem p-dotierenden Metall mit einem electron count pro Atom e/a im Bereich von 7 bis 8,5,
(4) auf Gd und Si basierenden Verbindungen der allgemeinen Formel (V)
Gd₅(SiₓGe₁₋ₓ)₄ (V)
mit x Zahl von 0,2 bis 1,
(5) Fe₂P-basierten Verbindungen,
(6) Manganiten des Perovskit-Typs,
(7) Seltenerden-Elemente enthaltenden Verbindungen der allgemeinen Formeln (VI) und (VII)
Tb₅(Si₄₋ₓGeₓ) (VI)
mit x = 0, 1, 2, 3, 4
XTiGe (VII)
mit X = Dy, Ho, Tm,
(8) auf Mn und Sb oder As basierenden Verbindungen der allgemeinen Formeln (VIII) und (IX)
Mn₂₋ₓZₓSb (VIII)
Mn₂ZₓSb₁₋ₓ (IX)
mit
Z Cr, Cu, Zn, Co, V, As, Ge,
x 0,01 bis 0,5,
wobei Sb durch As ersetzt sein kann, sofern Z nicht As ist.

11. Wärmetauscherbett nach Anspruch 10, **dadurch gekennzeichnet, dass** das thermomagnetische Material ausgewählt ist aus mindestens quarternären Verbindungen der allgemeinen Formel (I), die neben Mn, Fe, P und gegebenenfalls Sb zusätzlich Ge oder Si oder As oder Ge und Si oder Ge und As oder Si und As, oder Ge, Si und As enthalten.

12. Verfahren zur Herstellung von Wärmetauscherbetten nach einem der Ansprüche 1 bis 9, **dadurch gekennzeichnet, dass** man ein Pulver des jeweiligen thermomagnetischen Materials einer Formgebung zur Ausbildung der thermomagnetischen Materialien unterzieht, und nachfolgend die Materialien zur Ausbildung des Wärmetauscherbettes, vorzugsweise mit thermischen und/oder elektrischen Isolatoren alternierend, packt oder sie in eine thermische und/oder elektrische Isolatormatrix einbettet.

13. Verwendung eines Wärmetauscherbettes nach einem der Ansprüche 1 bis 11 in Kühlschränken, Klimaanlagen, Wärmepumpen oder in der Stromerzeugung durch direkte Umwandlung von Wärme.

## Claims

1. A heat exchanger bed composed of a cascade of at least three different magnetocaloric materials with different Curie temperatures, which are arranged in succession by ascending or descending Curie temperature and are preferably insulated from one another by intermediate thermal and/or electrical insulators, wherein the difference in the Curie temperatures of adjacent magnetocaloric materials is 0.5 to 2.5°C, the heat exchanger bed is a packed bed of particles of the magnetocaloric materials and the packed bed gives has a porosity in the range from 30 to 45%.

2. The heat exchanger bed according to claim 1, wherein the difference in the Curie temperatures of adjacent magnetocaloric materials is 1.5 to 2.5°C.

3. The heat exchanger bed according to claim 2, wherein the difference in the Curie temperatures of adjacent magnetocaloric materials is 1.8 to 2.2°C.

4. The heat exchanger bed according to any of claims 1 to 3, wherein 5 to 50 different magnetocaloric materials are present in the heat exchanger bed.

5. The heat exchanger bed according to any of claims 1 to 4, wherein the thermal and/or electrical insulators are formed from an organic polymer, a ceramic, inorganic oxides, carbon fibers or meshes, glasses, semiconductors or combinations thereof.

6. The heat exchanger bed according to any of claims 1 to 5, wherein the thermal and/or electrical insulators form a matrix into which the magnetocaloric materials are embedded.

7. The heat exchanger bed according to any of claims 1 to 6, wherein adjacent magnetocaloric materials have a separation of 0.05 to 3 mm.

8. The heat exchanger bed according to any of claims 1 to 7, wherein the magnetocaloric materials and thermal and/or electrical insulators form a layer sequence, the layer thickness of each of the magnetocaloric materials being 1 to 100 mm.

9. The heat exchanger bed according to any one of claims 1 to 8, which is a packed heat exchanger bed composed of thermomagnetic material particles which have a mean diameter in the range from 50 µm to 1 mm.

10. The heat exchanger bed according to any one of claims 1 to 9, wherein the thermomagnetic materials are selected from
(1) compounds of the general formula (I)
(A_{y}B_{1-y})_{2+δ}C_{w}DₓE_{z} (I)
where
A is Mn or Co,
B is Fe, Cr or Ni,
C, D and E at least two of C, D and E are different, have a non-vanishing concentration and are selected from P, B, Se, Ge, Ga, Si, Sn, N, As and Sb, where at least one of C, D and E is Ge or Si,
δ is a number in the range from -0.1 to 0.1,
w, x, y, z are numbers in the range from 0 to 1, where w + x + z = 1;
(2) La- and Fe-based compounds of the general formulae (II) and/or (III) and/or (IV) La(FeₓAl₁₋ₓ)₁₃H_{y} or La(FeₓSi₁₋ₓ)₁₃H_{y} (II) where
x is a number from 0.7 to 0.95,
y is a number from 0 to 3;
La(FeₓAl_{y}Co_{z})₁₃ or La(FeₓSi_{y}Co_{z})₁₃ (III)
where
x is a number from 0.7 to 0.95,
y is a number from 0.05 to 1 - x,
z is a number from 0.005 to 0.5;
LaMnₓFe₂₋ₓGe (IV)
where
x is a number from 1.7 to 1.95 and
(3) Heusler alloys of the MnTP type where T is a transition metal and P is a p-doping metal having an electron count per atom e/a in the range from 7 to 8.5,
(4) Gd- and Si-based compounds of the general formula (V)
Gd₅(SiₓGe₁₋ₓ)₄ (V)
where x is a number from 0.2 to 1,
(5) Fe₂P-based compounds,
(6) manganites of the perovskite type,
(7) compounds which comprise rare earth elements and are of the general formulae (VI) and (VII)
Tb₅(Si₄₋ₓGeₓ) (VI)
where x = 0, 1, 2, 3, 4,
XTiGe (VII)
where X = Dy, Ho, Tm,
(8) Mn- and Sb- or As-based compounds of the general formulae (VIII) and (IX)
Mn₂₋ₓZₓSb (VIII)
Mn₂ZₓSb₁₋ₓ (IX)
where
Z is Cr, Cu, Zn, Co, V, As, Ge,
x is from 0.01 to 0.5,
where Sb may be replaced by As when Z is not As.

11. The heat exchanger bed according to claim 10, wherein the thermomagnetic material is selected from at least quaternary compounds of the general formula (I) which, as well as Mn, Fe, P and optionally Sb, additionally comprise Ge or Si or As or Ge and Si or Ge and As or Si and As, or Ge, Si and As.

12. A process for producing heat exchanger beds according to any one of claims 1 to 9, which comprises subjecting a powder of the particular thermomagnetic material to shaping to form the thermomagnetic materials and subsequently packing the materials to form the heat exchanger bed, preferably alternating with thermal and/or electrical insulators, or embedding them into a thermal and/or electrical insulator matrix.

13. The use of a heat exchanger bed according to any one of claims 1 to 11 in refrigerators, air conditioning units, heat pumps or in power generation by direct conversion of heat.

## Revendications

1. Lit échangeur de chaleur constitué par une cascade d'au moins trois matériaux magnétocaloriques différents présentant des températures de Curie différentes, qui sont juxtaposés selon une température de Curie croissante ou décroissante et de préférence à chaque fois isolés les uns des autres par des isolants thermiques et/ou électriques intermédiaires, la différence des températures de Curie de matériaux magnétocaloriques adjacents étant de 0,5 à 2,5°C, le lit échangeur de chaleur est un lit tassé de particules des matériaux magnétocaloriques et le lit tassé a une porosité de 40 à 45%.

2. Lit échangeur de chaleur selon la revendication 1, **caractérisé en ce que** la différence des températures de Curie de matériaux magnétocaloriques adjacents est de 1,5 à 2,5°C.

3. Lit échangeur de chaleur selon la revendication 2, **caractérisé en ce que** la différence des températures de Curie de matériaux magnétocaloriques adjacents est de 1,8 à 2,2°C.

4. Lit échangeur de chaleur selon l'une quelconque des revendications 1 à 3, **caractérisé en ce que** 5 à 50 matériaux magnétocaloriques différents se trouvent dans le lit échangeur de chaleur.

5. Lit échangeur de chaleur selon l'une quelconque des revendications 1 à 4, **caractérisé en ce que** les isolants thermiques et/ou électriques sont formés à partir d'un polymère organique, d'une céramique, d'oxydes inorganiques, de fibres ou de filets de carbone, de verres, de semi-conducteurs ou de combinaisons de ceux-ci.

6. Lit échangeur de chaleur selon l'une quelconque des revendications 1 à 5, **caractérisé en ce que** les isolants thermiques et/ou électriques forment une matrice, dans laquelle les matériaux magnétocaloriques sont enrobés.

7. Lit échangeur de chaleur selon l'une quelconque des revendications 1 à 6, **caractérisé en ce que** des matériaux magnétocaloriques adjacents présentent une distance de 0,05 à 3 mm.

8. Lit échangeur de chaleur selon l'une quelconque des revendications 1 à 7, **caractérisé en ce que** les matériaux magnétocaloriques et les isolants thermiques et/ou électriques forment une succession de couches, l'épaisseur de couche des matériaux magnétocaloriques valant à chaque fois 1 à 100 mm.

9. Lit échangeur de chaleur selon l'une quelconque des revendications 1 à 8, **caractérisé en ce qu'**il s'agit d'un lit échangeur de chaleur tassé de particules de matériau thermomagnétique, qui présentent un diamètre moyen dans la plage de 50 µm à 1 mm.

10. Lit échangeur de chaleur selon l'une quelconque des revendications 1 à 9, **caractérisé en ce que** les matériaux thermomagnétiques sont choisis parmi
(1) les composés de formule générale (I)
**(A_{y}B_{1-y})_{2+δ}C_{w}DₓE_{z}** **(I)**
où
A signifie Mn ou Co,
B signifie Fe, Cr ou Ni,
C, D, E au moins deux parmi C, D, E sont différents l'un de l'autre, présentent une concentration qui ne se dissipe pas et sont choisis parmi P, B, Se, Ge, Ga, Si, Sn, N, As et Sb, au moins l'un parmi C, D et E étant Ge ou Si,
δ signifie un nombre de la plage de -0,1 à 0,1
w, x, y, z valent des nombres dans la plage de 0 à 1, w + x + z = 1 ;
(2) les composés à base de La et Fe des formules générales (II) et/ou (III) et/ou (IV)
**La(FeₓAl₁₋ₓ)₁₃H_{y}** ou **La(FeₓSi₁₋ₓ)₁₃H_{y}** **(II)**
où
x vaut un nombre de 0,7 à 0,95,
y vaut un nombre de 0 à 3,
**La(FeₓAl_{y}Co_{z})₁₃** ou **La(FeₓSi_{y}Co_{z})₁₃** **(III)**
où
x vaut un nombre de 0,7 à 0,95,
y vaut un nombre de 0,05 à 1-x,
z vaut un nombre de 0,005 à 0,5,
**LaMnₓFe₂₋ₓGe** **(IV)**
où
x vaut un nombre de 1,7 à 1,95 et
(3) les alliages de Heusler du type MnTP, T représentant un métal de transition et P un métal dopé par p présentant rapport du nombre d'électrons par atome e/a dans la plage de 7 à 8,5,
(4) les composés à base de Gd et Si de formule générale (V)
**Gd₅(SiₓGe₁₋ₓ)₄** **(V)**
x valant un nombre de 0,2 à 1
(5) les composés à base de Fe₂P,
(6) les manganites du type Pérovskite,
(7) les composés contenant des éléments des terres rares des formules générales (VI) et (VII)
**Tb₅(Si₄₋ₓGeₓ)** **(VI)**
où x = 0, 1, 2, 3, 4
**XTiGe** **(VII)**
où X = Dy, Ho, Tm,
(8) les composés à base de Mn et de Sb ou d'As des formules générales (VIII) et (IX)
**Mn₂₋ₓZₓSb** **(VIII)**
**Mn₂ZₓSb₁₋ₓ** **(IX)**
où
Z signifie Cr, Cu, Zn, Co, V, As, Ge,
x vaut 0,01 à 0,5,
Sb pouvant être remplacé par As pour autant que Z ne représente pas As.

11. Lit échangeur de chaleur selon la revendication 10, **caractérisé en ce que** le matériau thermomagnétique est choisi parmi des composés au moins quaternaires de formule générale (I), qui contiennent, outre Mn, Fe, P et le cas échéant Sb, en plus Ge ou Si ou As ou Ge et Si ou Ge et As ou Si et As, ou Ge, Si et As .

12. Procédé pour la préparation de lits échangeurs de chaleur selon l'une quelconque des revendications 1 à 9, **caractérisé en ce qu'**on soumet une poudre du matériau thermomagnétique en question à un façonnage pour la réalisation des matériaux thermomagnétiques et on tasse ensuite les matériaux pour former le lit échangeur de chaleur, de préférence en alternance avec des isolants thermiques et/ou électriques ou on les enrobe dans une matrice d'isolant thermique et/ou électrique.

13. Utilisation d'un lit échangeur de chaleur selon l'une quelconque des revendications 1 à 11 dans des réfrigérateurs, des installations de climatisation, des pompes à chaleur ou dans la production de courant par transformation directe de chaleur.
